(19) Europäisches Patentamt
European Patent Office
Office européen des brevets

(11) EP 4 637 014 A1

(12) EUROPEAN PATENT APPLICATION
published in accordance with Art. 153(4) EPC

(43) Date of publication:
22.10.2025 Bulletin 2025/43

(51) International Patent Classification (IPC):
H02M 3/155 (2006.01)

(21) Application number: 23903288.1

(22) Date of filing: 29.11.2023

(52) Cooperative Patent Classification (CPC):
H02M 3/155

(86) International application number:
PCT/JP2023/042761

(87) International publication number:
WO 2024/127998 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.12.2022 JP 2022198100

(71) Applicant: DENSO CORPORATION
Kariya-city, Aichi 448-8661 (JP)

(72) Inventors:
• TOMITA, Kenji
Nisshin-city, Aichi 4700111 (JP)
• SHIMIZU, Takahiro
Kariya- city, Aichi 4488661 (JP)
• UEDA, Yusuke
Kariya- city, Aichi 4488661 (JP)

(74) Representative: TBK
Bavariaring 4-6
80336 München (DE)

(54) CONTROL DEVICE FOR DC/DC CONVERTER AND PROGRAM

(57) A control device (50) for a DC-DC converter (10, 100) includes: an acquisition unit that, for each switching period for a switch (31), acquires a detected current value from a current detection unit (42) for detecting current flowing in a reactor (30); and a determination unit that determines whether the current control mode is a discontinuous current mode or a continuous current mode. The determination unit calculates the difference between the detected current values acquired at corresponding specific timings within different switching periods or the difference between the detected current values acquired at two specific timings within each switching period, and determines whether the control mode is the discontinuous current mode or the continuous current mode based on the calculated difference.

FIG.1

EP 4 637 014 A1

**Description**

[Cross Reference to Related Applications]

This application is based on Japanese Patent Application No. 2022-198100 filed on December 12, 2022, the description of which is incorporated herein by reference.

[Technical Field]

The present disclosure relates to a DC-DC converter control device and a program.

[Background Art]

DC-DC converters with switches and reactors are conventionally known. As described in PTL 1, a known control device for such a converter determines whether the current control mode is a discontinuous current mode or a continuous current mode based on detected current values from a current detection unit that detects the value of the current flowing in a reactor. More specifically, the control device determines the current control mode as the discontinuous current mode based on the detected current values at consecutive sampling timings being close to zero.

[Citation List]

[Patent Literature]

PTL 1: JP 2016-149902 A

[Summary of the Invention]

An error may occur between the detected current value from the current detection unit and the actual value of the current flowing in the reactor. The current detection error may cause an erroneous determination of the control mode.
A major object of the present disclosure is to provide a DC-DC converter control device and a program that can increase the control mode determination accuracy.
The present disclosure provides a DC-DC converter control device that is applicable to a DC-DC converter including a switch and a reactor and, for each switching period of the switch including an ON time and an OFF time subsequent thereto, controls the switch to store magnetic energy into the reactor and release magnetic energy from the reactor, thereby transforming and outputting input voltage, the DC-DC converter control device comprising:

> an acquisition unit configured to, for each switching period, acquire a detected current value from a current detection unit for detecting a current flowing in the reactor; and
> a determination unit configured to determine whether the current control mode is a discontinuous current mode or a continuous current mode,
> in which
> the determination unit is configured to

>> perform a calculation process to calculate the difference between the detected current values acquired at corresponding specific timings within different switching periods or the difference between the detected current values acquired at two specific timings within each switching period, and
>> determine whether the control mode is the discontinuous current mode or the continuous current mode based on the calculated difference.

The difference between the detected current values acquired at corresponding specific timings within different switching periods or the difference between detected current values acquired at two specific timings within each switching period refers to values with reduced current detection errors. Thus, the technique according to the present disclosure, which determines the control mode based on the above-described differences, can improve the control mode determination accuracy.

[Brief Description of the Drawings]

The above and other objectives, features, and advantages of the present disclosure will become more clearly apparent from the detailed description given below with reference to the accompanying drawings, in which:

Fig. 1 is a diagram illustrating the overall configuration of a control system including a DC-DC converter according to a first embodiment;

Fig. 2 is a timing chart showing switching behavior and variation in the reactor current value in the discontinuous current mode;

Fig. 3 is a timing chart showing switching behavior and variation in the reactor current value in the critical current mode;

Fig. 4 is a timing chart showing switching behavior and variation in the reactor current value in the continuous current mode;

Fig. 5 is a diagram showing variation in the average reactor current value observed when the switch from the continuous current mode to the discontinuous current mode is delayed;

Fig. 6 is a diagram showing variation in the average reactor current value observed when the switch from the continuous current mode to the discontinuous current mode is earlier;

Fig. 7 is a timing chart showing an example of reactor current ringing occurring in the discontinuous current mode;

Fig. 8 is a timing chart showing an example of reverse reactor current occurring in the discontinuous current mode;

Fig. 9 is a timing chart showing current sampling timings and variation in reactor current and others;

Fig. 10 is a flowchart showing control processing for the DC-DC converter;

Fig. 11 is a timing chart showing variation in values such as the average reactor current value and the sum;

Fig. 12 is a flowchart showing control processing for a DC-DC converter according to a modification of the first embodiment;

Fig. 13 is a timing chart showing current sampling timings and variation in reactor current and others according to a second embodiment;

Fig. 14 is a timing chart showing variation in values such as the average reactor current value and the sum;

Fig. 15 is a timing chart showing variation in values such as the average reactor current value and differences in current according to a third embodiment;

Fig. 16 is a timing chart showing current sampling timings and variation in reactor current and others according to another embodiment; and

Fig. 17 is a diagram illustrating the overall configuration of a control system according to another embodiment.

[Description of the Embodiments]

Embodiments will now be described with reference to the drawings. In the embodiments, functionally and/or structurally corresponding components and/or associated components may be assigned the same reference numerals or reference numerals that differ in digits in the hundreds place or higher. For corresponding components and/or associated components, reference may be made to the description in other embodiments.

<First Embodiment>

A first embodiment of a control device according to the present disclosure will now be described with reference to the drawings.

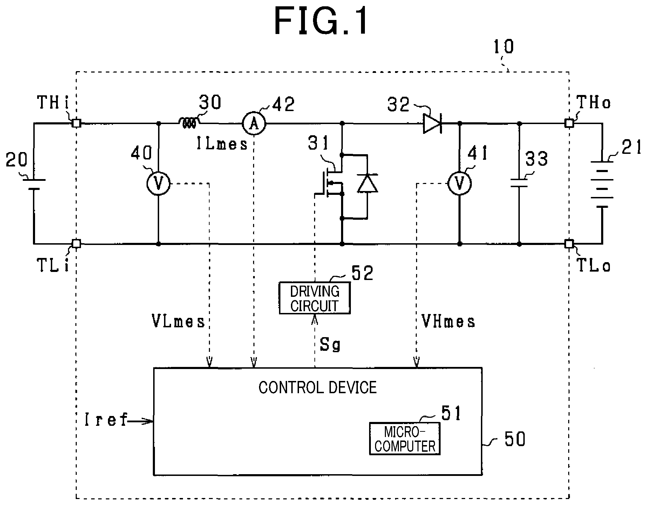

As illustrated in Fig. 1, a DC-DC converter 10 is a non-isolated boost converter that steps up voltage input via a high-side input terminal THi and a low-side input terminal TLi and outputs the voltage via a high-side output terminal THo and a low-side output terminal TLo. The DC-DC converter 10 includes a reactor 30, a switch 31, a diode 32, and a capacitor 33. In the present embodiment, the switch 31 is an n-channel MOSFET. The switch 31 may not be an n-channel MOSFET but may be, for example, an IGBT with freewheel diodes connected in antiparallel.

The first end of the reactor 30 is connected with the positive terminal of a DC power supply 20 via the high-side input terminal THi. The second end of the reactor 30 is connected with the drain of the switch 31 and the anode of the diode 32. The source of the switch 31 is connected with the negative terminal of the DC power supply 20 via the low-side input terminal TLi. The DC power supply 20 is, for example, a storage battery or a fuel cell.

The cathode of the diode 32 is connected with the first end of the capacitor 33 and the high-side output terminal THo. The second end of the capacitor 33 is connected with the source of the switch 31, the low-side input terminal TLi, and the low-side output terminal TLo. The high-side output terminal THo is connected with the positive terminal of a storage battery 21, and the negative terminal of the storage battery 21 is connected with the low-side output terminal TLo. The storage battery 21 is a secondary battery capable of being charged and discharged, such as a lithium-ion battery or a nickel-hydrogen battery.

The DC-DC converter 10 includes an input voltage sensor 40 that is an input voltage detection unit, an output voltage sensor 41 that is an output voltage detection unit, and a current sensor 42 that is a current detection unit. The input voltage sensor 40 detects input voltage in the DC-DC converter 10, and the output voltage sensor 41 detects output voltage in the DC-DC converter 10. The current sensor 42 detects the value of current flowing in the reactor 30. The detected values from each of the sensors 40 to 42 are input to a control device 50 included in the DC-DC converter 10.

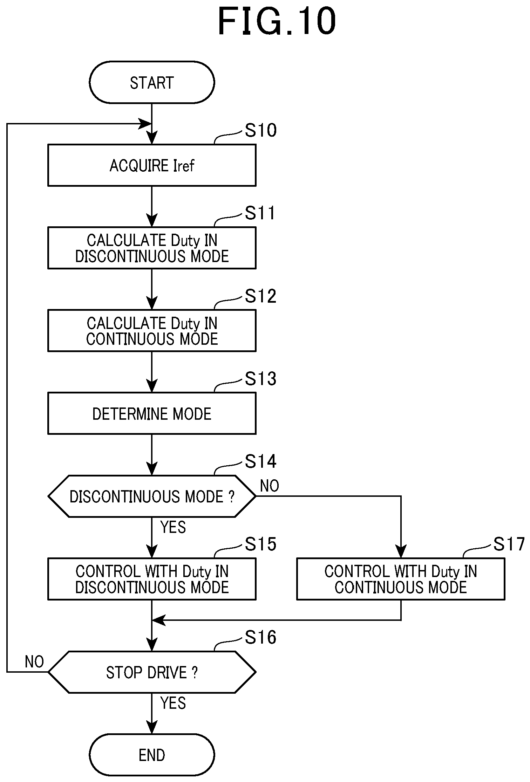

The control device 50 is basically a microcomputer 51, and the microcomputer 51 includes a CPU. The functions provided by the microcomputer 51 may be provided by software recorded on a tangible memory device and a computer for executing it, software alone, hardware alone, or a combination thereof. For example, when provided by an electronic circuit, which is hardware, the microcomputer 51 may be provided by an analog circuit or a digital circuit including a large number of logic circuits. For example, the microcomputer 51 executes programs stored in its non-transitory tangible storage medium serving as a storage unit. Examples of the programs include programs for the processing described later, shown in Fig. 10 and other figures. When the programs are executed, the method corresponding to the programs is implemented. The storage unit is, for example, a non-volatile memory. The programs stored in the storage unit can be updated via a communication network such as an over-the-air (OTA) network or the internet.

The control device 50 selects the control mode from the discontinuous current mode and the continuous current mode to control the switch 31.

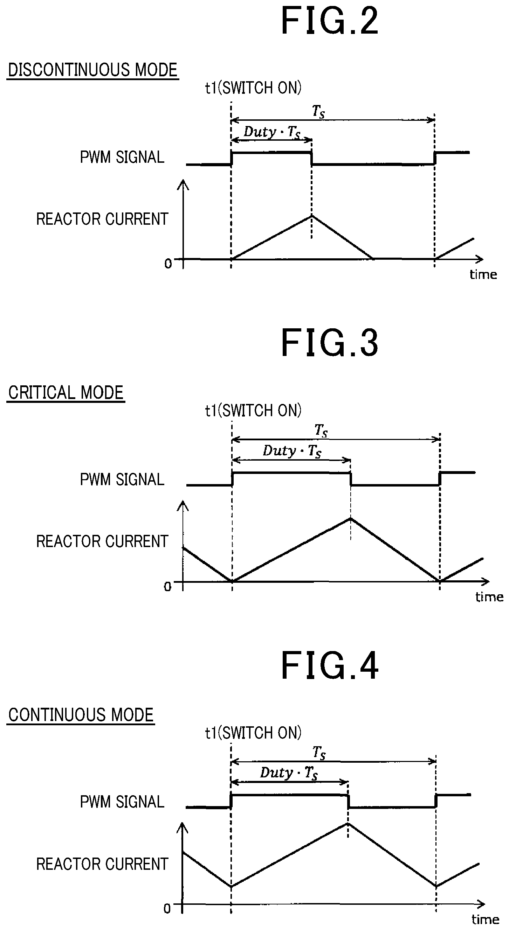

The discontinuous current mode is, as illustrated in Fig. 2, a control mode with one switching period Ts of the switch 31 including a time for which the value of current flowing in the reactor 30 is zero. The control device 50 calculates the duty ratio Duty in the discontinuous current mode and controls the switch 31 based on the calculated duty ratio Duty. The duty ratio Duty is a value defining the proportion of the ON time Ton of the switch 31 in one switching period Ts (Ton/Ts = Duty). Within one switching period Ts, the control device 50 turns the switch 31 on for the time Duty × Ts and turns the switch 31 off for the time (1 - Duty) × Ts. During the ON time of the switch 31, the value of current flowing in the reactor 30 increases gradually, and the reactor 30 stores magnetic energy. During the OFF time of the switch 31, the magnetic energy stored in the reactor 30 is released, and the value of current flowing in the reactor 30 decreases to zero. As a result, within one switching period Ts, the temporal waveform of the value of current flowing in the reactor 30 ideally becomes triangular and then remains at zero. In the present embodiment, the control device 50 calculates the duty ratio Duty in the discontinuous current mode based on equation (eq1) below. The right side of equation (eq1) below is a feed-forward term for the duty ratio Duty.

[Math. 1]

$$\text{Duty} = \sqrt{2L_s \cdot f_{sw} \cdot \frac{VH_{mes} - VL_{mes}}{VH_{mes} \cdot VL_{mes}} \cdot I_{ref}} \quad \cdots (eq1)$$

In equation (eq1) above, VLmes represents an input voltage detection value detected by the input voltage sensor 40 during the current switching period, and VHmes represents an output voltage detection value detected by the output voltage sensor 41 during the current switching period. Ls represents an expected inductance value of the reactor 30, and fsw represents the switching frequency (= 1/Ts) of the switch 31. Iref represents a command value for the average value of current flowing in the reactor 30. The average current value refers to the time average value of current flowing in the reactor 30 during one switching period Ts. The command value Iref input to the control device 50 is updated, for example, per switching period Ts.

The continuous current mode is, as illustrated in Fig. 4, a control mode in which current continues to flow in the reactor 30 from the first end to the second end during one switching period Ts of the switch 31. The control device 50 calculates the duty ratio Duty in the continuous current mode and controls the switch 31 based on the calculated duty ratio Duty. In the present embodiment, the control device 50 calculates the duty ratio Duty in the continuous current mode based on equation (eq2) below. The right side of equation (eq2) below is a feed-forward term for the duty ratio Duty.

[Math. 2]

$$\text{Duty} = 1 - \frac{VL_{mes}}{VH_{mes}} \quad \cdots (eq2)$$

The boundary between the discontinuous current mode and the continuous current mode refers to the critical current mode illustrated in Fig. 3. The critical current mode is a control mode in which the switch 31 is turned on when the value of current flowing in the reactor 30 decreases to zero.

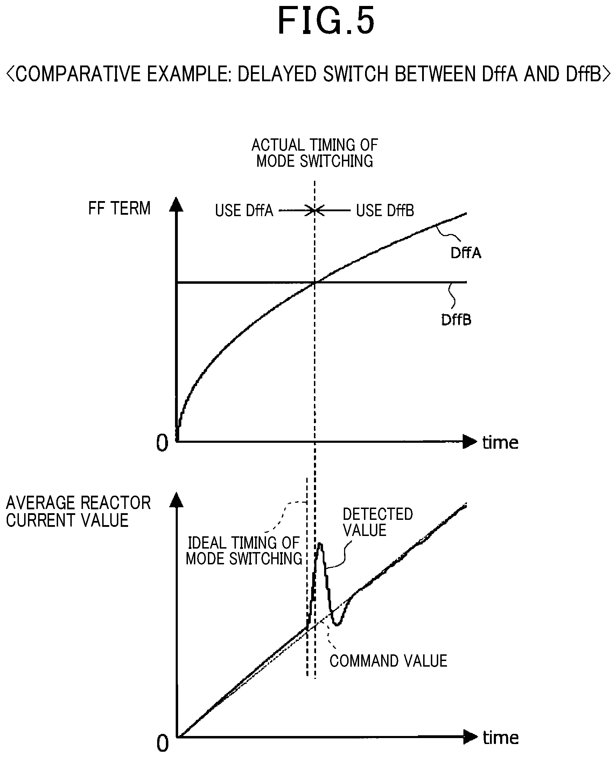

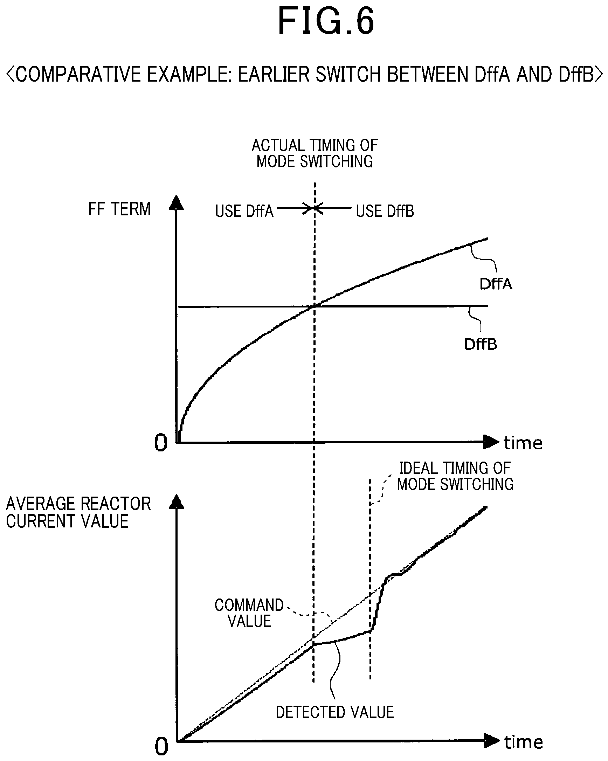

To mitigate a reduction in the controllability of current flowing in the reactor 30, it is necessary to minimize the deviation between the actual timing of control mode switching and the ideal timing of switching. This deviation is described using the calculation examples in Figs. 5 and 6. The calculation examples in Figs. 5 and 6 show variation in the average value of current flowing in the reactor 30 observed when the command value Iref is increased gradually at a constant rate. In Figs. 5 and 6, DffA represents the duty ratio Duty in the discontinuous current mode in equation (eq1) above, whereas DffB represents the duty ratio Duty in the continuous current mode in equation (eq2) above.

Fig. 5 shows a calculation example for a case where the actual timing of switching from the discontinuous current mode to the continuous current mode is delayed relative to the ideal timing of switching. In this example, the duty ratio DffA (> DffB) for the discontinuous current mode is used in a state in which the duty ratio DffB for the continuous current mode should be used, and accordingly the average current value is temporarily significantly larger than the command value Iref.

Fig. 6 shows a calculation example for a case where the actual timing of switching from the discontinuous current mode to the continuous current mode is earlier than the ideal timing of switching. In this example, the duty ratio DffB (< DffA) for the continuous current mode is used in a state in which the duty ratio DffA for the discontinuous current mode should be used, and accordingly the average current value is temporarily significantly smaller than the command value Iref.

As described above, when the actual timing of control mode switching deviates significantly from the ideal timing of switching, the average value of current flowing in the reactor 30 deviates significantly from the command value Iref.

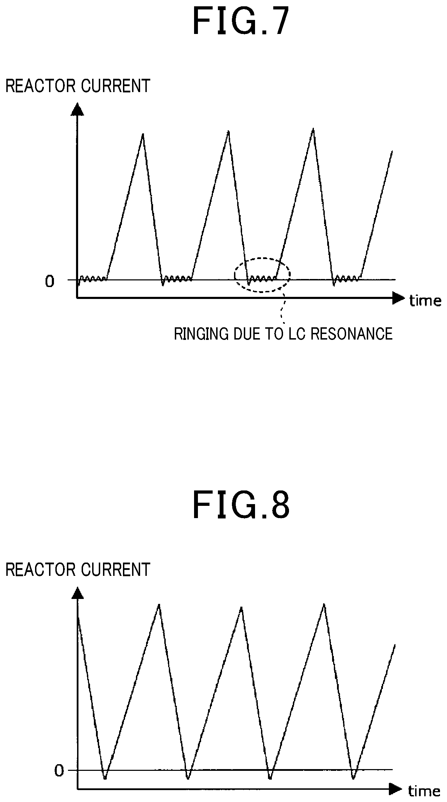

To address this, the configuration adopted in the present embodiment appropriately determines the timing of switching. In the present embodiment, during the OFF time of the switch 31, even when the discontinuous current mode experiences current ringing as shown in Fig. 7 or reverse current to the reactor 30 as shown in Fig. 8, the timing of switching can be appropriately determined. The ringing of current flowing in the reactor 30 in Fig. 7 is due to stray capacitance present in the switch 31 and caused by LC resonance after the stored energy in the reactor 30 becomes zero. The example shown in Fig. 8 is due to stray capacitance in the switch 31 and represents a current waveform similar to that in the continuous current mode, but the current mode is actually the discontinuous current mode.

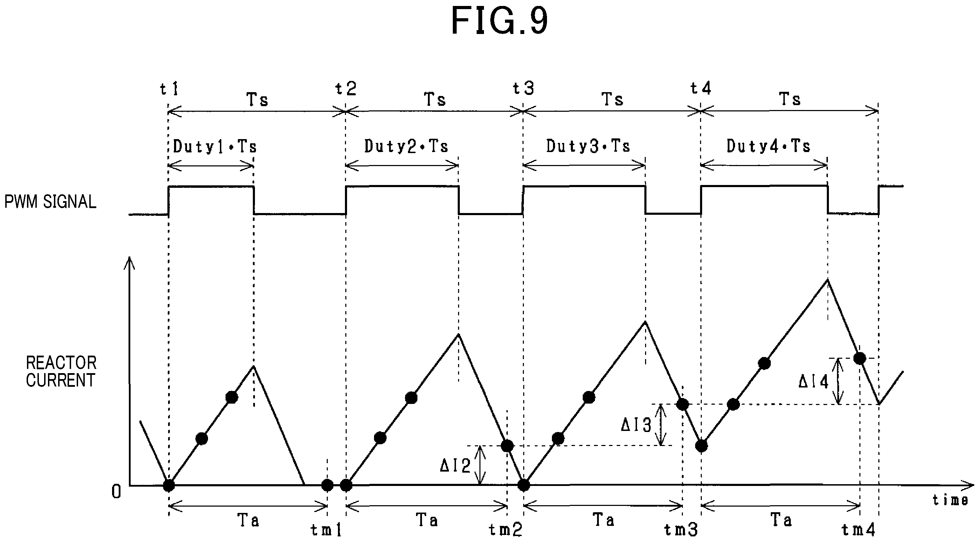

The determination method in the present embodiment will be described with reference to Fig. 9. Fig. 9 shows variation in the PWM signal provided to the gate of the switch 31 and variation in current flowing in the reactor 30. The control device 50 obtains multiple (for example, dozen) samples of detected current values from the current sensor 42 at regular intervals within each switching period Ts. Fig. 9 shows the detected current values acquired at the first three sampling timings and the detected current value acquired at the last sampling timing within each of the four switching periods.

The control device 50 calculates the difference $\Delta Ii$ between the detected current value ILmes (i) acquired at the last sampling timing tmi (i = 1, 2, 3, 4, corresponding to a first specific timing) within the OFF time of the current switching period and the detected current value ILmes (i-1) acquired at the last sampling timing tmi-1 (corresponding to a second specific timing) within the OFF time of the switching period one period prior to the current switching period (hereinafter, the previous switching period). The last sampling timing is the timing when a predetermined time period Ta (< Ts) has elapsed since the turning on of the switch 31. More specifically, the current value is detected at the same timing within each switching period.

The control device 50 calculates the sum of the differences $\Delta Ii$ calculated in the individual switching periods. The sum is expressed by equation (eq3) below. For example, the control device 50 continues to calculate differences $\Delta Ii$ and the sum from startup until the current switching period. As a result, the sum is updated for each switching period.

[Math. 3]

$$\mathrm{Sum} = \sum_i \Delta I_i \quad \cdots (eq3)$$

When determining that the calculated sum exceeds a threshold, the control device 50 determines that the control mode has switched from the discontinuous current mode to the continuous current mode. This determination method is based on the tendency for the average value of current flowing in the reactor 30 to increase suddenly during the period of transition from the discontinuous current mode to the continuous current mode.

The difference between detected current values refers to values with reduced current detection errors from the current sensor 42. This allows a reduction in the influence of current detection errors on the control mode determination accuracy.

The sampling timing for the detected current value ILmes used to calculate the difference $\Delta Ii$ is set in the OFF time, which is the latter phase of the switching period. For this reason, the detected current value ILmes is less affected by switching noise caused when the switch 31 is turned on. This can enhance the control mode determination accuracy.

The sampling timing for the detected current value ILmes used to calculate the difference $\Delta Ii$ is set in the OFF time when the duty ratio Duty reaches its maximum possible value (< 1) regardless of the duty ratios Duty calculated in steps S11 and S12. This setting also contributes to improvement in the control mode determination accuracy. More specifically, the sampling timing set immediately before the end of each switching period allows accurate detection of a sudden increase in the average current value. The maximum value is, for example, a value greater than 0.5 and smaller than 1, a value greater than or equal to 0.7 and smaller than 1, a value greater than or equal to 0.9 and smaller than 1, or a value greater than or equal to 0.95 and smaller than 1.

Fig. 10 shows a procedure for reactor current control performed by the control device 50.

In step S10, the command value Iref in the current switching period is acquired.

In step S11, the duty ratio Duty in the discontinuous current mode is calculated based on the input voltage detection value VLmes and output voltage detection value VHmes acquired in the current switching period, the command value Iref acquired in step S10, and equation (eq1) above.

In step S12, the duty ratio Duty in the continuous current mode is calculated based on the input voltage detection value VLmes and output voltage detection value VHmes acquired in the current switching period and equation (eq2) above.

In step S13, mode determination is performed. More specifically, the difference ΔIi is calculated by subtracting the detected current value ILmes acquired at the last sampling timing within the previous switching period from the detected current value ILmes acquired at the last sampling timing within the current switching period. As indicated in equation (eq3) above, the calculated difference is added to the sum calculated in the previous switching period to calculate the sum in the current switching period. For example, the control device 50 is to exclude the difference calculated in the first switching period after startup from calculating the sum.

In step S14, it is determined whether the control mode in the next switching period is the discontinuous current mode or the continuous current mode. Specifically, if the sum calculated in step S13 is determined to be smaller than or equal to a threshold, the control mode in the next switching period is determined as the discontinuous current mode. If the sum calculated in step S13 is determined to be greater than the threshold, the control mode in the next switching period is determined as the continuous current mode.

In the present embodiment, the processing in steps S13 and S14 corresponds to an acquisition unit and a determination unit.

When the discontinuous current mode is confirmed in step S14, the processing proceeds to step S15, in which a drive command Sg is calculated based on the duty ratio Duty in the discontinuous current mode calculated in step S11, and then output to a driving circuit 52. As a result, the switch 31 is controlled based on the duty ratio Duty calculated in step S11 so that the control mode will be the discontinuous current mode.

In step S16, it is determined whether a command to stop the drive of the DC-DC converter 10 has been issued. If it is determined that no drive stop command has been issued, the processing proceeds to step S10.

In contrast, when the continuous current mode is confirmed in step S14, the processing proceeds to step S17, in which a drive command Sg is calculated based on the duty ratio Duty in the continuous current mode calculated in step S12, and then output to the driving circuit 52. As a result, the switch 31 is controlled based on the duty ratio Duty calculated in step S12 so that the control mode will be the continuous current mode.

In addition, when it is determined that the sum calculated in step S13 has once exceeded the threshold and the sum calculated in step S13 has since fallen to or below the threshold, the control mode in the next switching period is to be determined to switch from the continuous current mode to the discontinuous current mode.

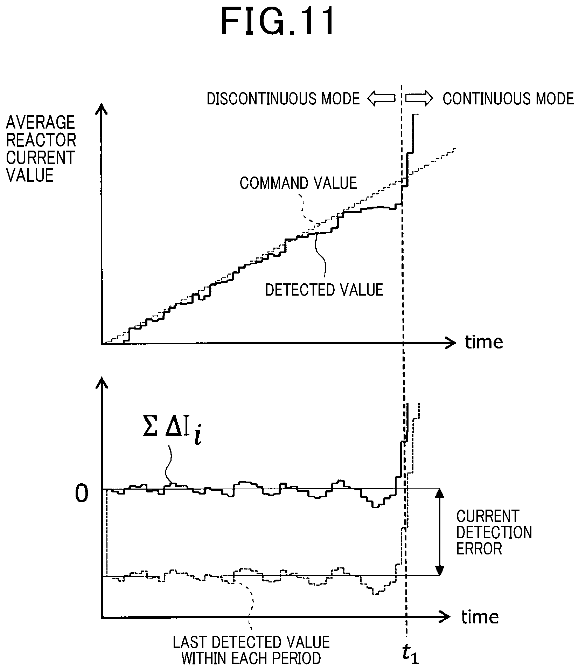

Fig. 11 shows variations in the average current value calculated based on the detected current value ILmes when the command value Iref increases gradually at a constant rate, the sum calculated in step S13, and the detected current value ILmes at the last sampling timing within each switching period. In the example illustrated in Fig. 11, the detected current value ILmes includes current detection errors that cause the detected current value ILmes to be smaller than the value of actual current flowing in the reactor 30.

As shown in Fig. 11, the sum refers to values with reduced current detection errors. At time t1, the control device 50 determines that the sum has exceeded the threshold. Accordingly, the duty ratio Duty used for current control of the reactor 30 is switched from the duty ratio Duty in the discontinuous current mode to the duty ratio Duty in the continuous current mode.

According to the present embodiment described above, even when, for example, current ringing or reverse current occurs, the timing of switching from the discontinuous current mode to the continuous current mode can be appropriately determined. This can improve the tracking performance of the average current value with respect to the command value Iref during the period before and after the transition from the discontinuous current mode to the continuous current mode, enhancing current controllability.

<Modification of First Embodiment>

· For each switching period, a detected current value acquired at a sampling timing other than the last sampling timing within the OFF time (e.g., one or two sampling timings before the last sampling timing) may be used for calculation of the sum in step S13.

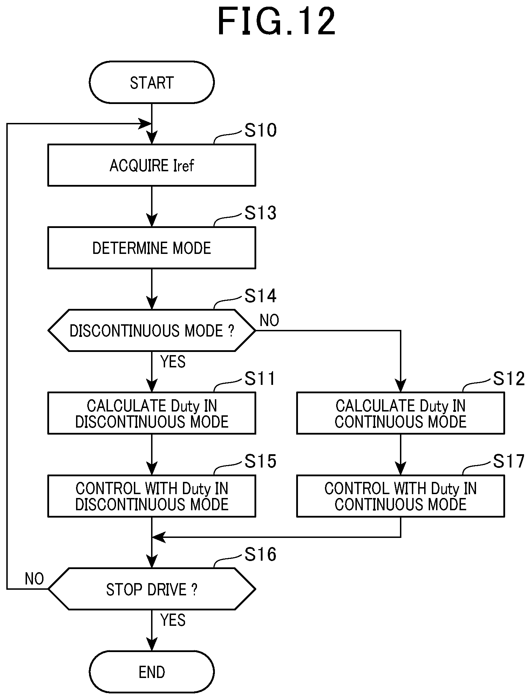

· As shown in Fig. 12, the calculation of the duty ratios Duty in steps S11 and S12 may be performed after step S14.

<Second Embodiment>

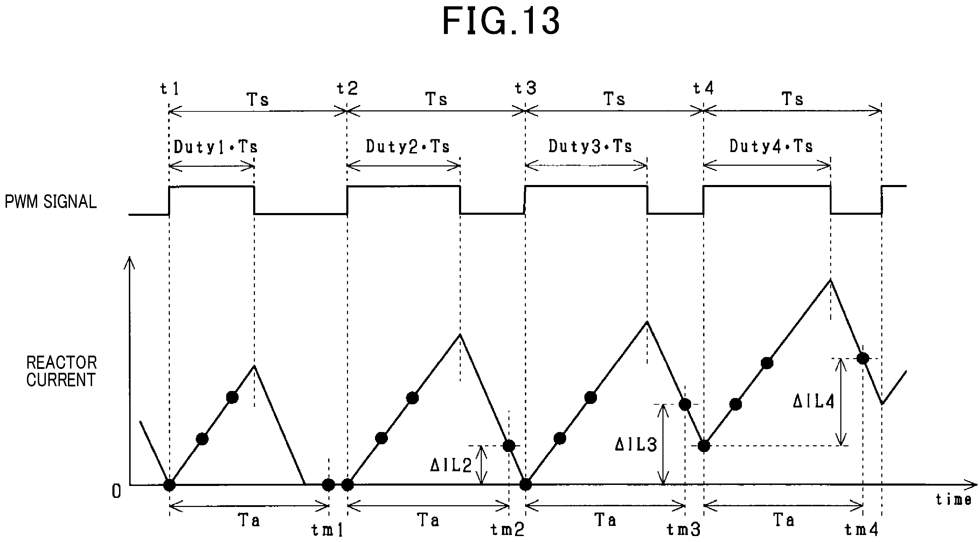

A second embodiment will now be described with reference to the drawings with emphasis on differences from the first embodiment. In the present embodiment, the sum calculation method in step S13 is modified. The sum calculation method will now be described with reference to Fig. 13. In the same manner as Fig. 9, Fig. 13 shows variation in the PWM signal provided to the gate of the switch 31 and variation in current flowing in the reactor 30.

The control device 50 obtains multiple (for example, dozen) samples of detected current values from the current sensor 42 at regular intervals within each switching period Ts. In the same manner as Fig. 9, Fig. 13 shows the detected current values acquired at the first three sampling timings and the detected current value acquired at the last sampling timing within each of the four switching periods.

The control device 50 calculates the difference $\Delta ILi$ by subtracting, from the detected current value ILmes acquired at the last sampling timing tmi (i = 1, 2, 3, 4, corresponding to a first specific timing) within the OFF time of the current switching period, the detected current value ILmes acquired at the first sampling timing ti (corresponding to a second specific timing) set within the ON time of the current switching period. In the example illustrated in Fig. 13, the first sampling timing is the timing when the command for the PWM signal is switched to ON. In the same manner as Fig. 9, the last sampling timing tmi is the timing when a predetermined time period Ta (< Ts) has elapsed since turning on of the switch 31.

The control device 50 calculates the power of the difference $\Delta Ii$ calculated in the current switching period. The control device 50 adds the power calculated in the current switching period to the sum of the powers calculated up to the previous switching period to calculate the sum expressed in equation (eq4) below. On the right side of equation (eq4) below, $\Delta ILi$ represents the base of the power, and $\alpha$ represents an exponent. The exponent $\alpha$ may be set to, for example, a value greater than or equal to five, a value greater than or equal to seven, or a value greater than or equal to ten (for example, ten). For example, the control device 50 continues to calculate the power and the sum from startup until the current switching period. The sum is updated for each switching period.

[Math. 4]

$$\text{Sum} = \sum_i \Delta IL_i^{\alpha} \quad \cdot \cdot \cdot (eq4)$$

In the present embodiment, the control device 50 is configured so that when the actual control mode is the discontinuous current mode, the absolute value of the difference $\Delta ILi$ calculated for each switching period is a value smaller than one, whereas when the actual control mode is the continuous current mode, the absolute value of the difference $\Delta ILi$ calculated for each switching period is a value greater than one. Thus, when the control mode is the discontinuous current mode, the power $\Delta ILi^{\wedge}\alpha$ for each switching period is a value close to zero, and the sum is also a value close to zero. In contrast, when the control mode is the continuous current mode, the power $\Delta ILi^{\wedge}\alpha$ for each switching period is a value significantly greater than one, and the sum is also a significantly great value. Thus, when determining that the sum calculated based on equation (eq4) above exceeds a threshold, the control device 50 determines that the control mode has switched from the discontinuous current mode to the continuous current mode. The threshold in the present embodiment may be set to a value different from the threshold in the first embodiment.

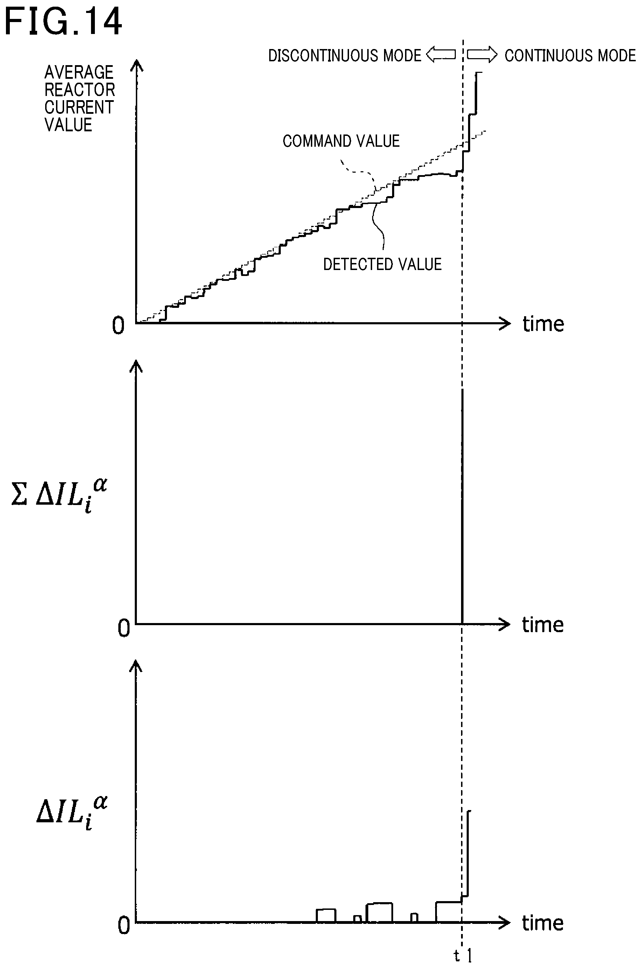

Fig. 14 shows, when the command value Iref increases gradually at a constant rate, variations in the average current value calculated based on the detected current value ILmes, the sum calculated in step S13, and the power calculated for each switching period. In the example illustrated in Fig. 14, at time t1, the power increases suddenly, and as a result, the sum also increases suddenly. The control device 50 thus determines that the sum has exceeded the threshold. Accordingly, the duty ratio Duty used for current control of the reactor 30 is switched from the duty ratio Duty in the discontinuous current mode to the duty ratio Duty in the continuous current mode.

The present embodiment described above also enables appropriate determination of the timing of switching from the discontinuous current mode to the continuous current mode.

<Modification of Second Embodiment>

The control device 50 may use, as the detected current value used for calculation of the difference $\Delta ILi$, the detected current value acquired at a sampling timing other than the last sampling timing within the OFF time of the current switching period (e.g., one or two sampling timings before the last sampling timing), instead of the detected current value acquired at the last sampling timing. Furthermore, the control device 50 may use, as the detected current value used for calculation of the difference $\Delta ILi$, the detected current value ILmes acquired at a sampling timing other than the first sampling timing within the ON time of the current switching period (e.g., one or two sampling timings after the first sampling timing), instead of the detected current value acquired at the first sampling timing.

<Third Embodiment>

A third embodiment will now be described with reference to the drawings with emphasis on differences from the first embodiment. In the present embodiment, the processing method in steps S13 and S14 is modified.

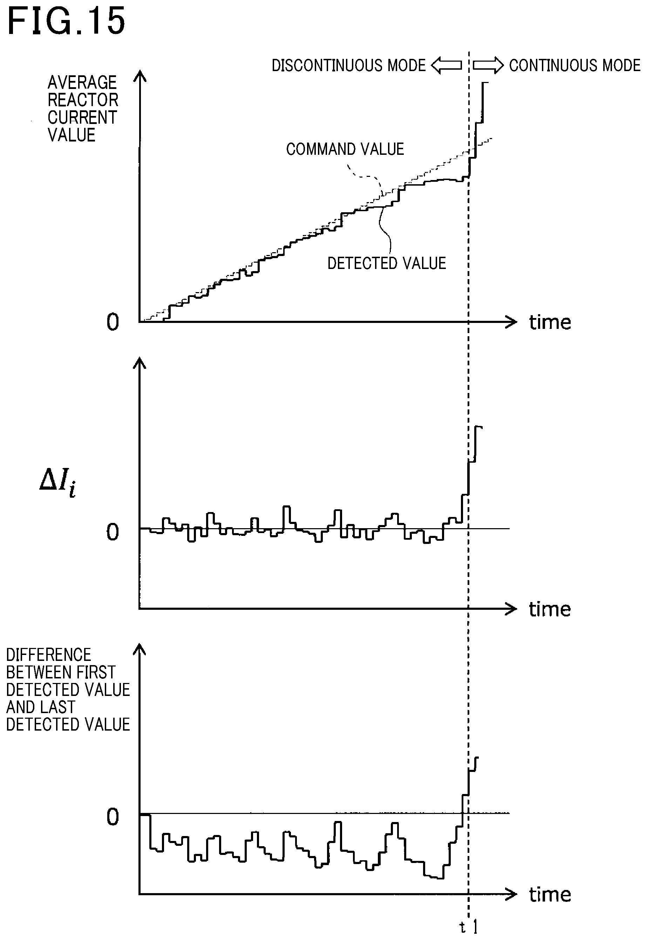

In step S13, the control device 50 subtracts, from the detected current value ILmes (i) acquired at the last sampling timing tmi within the OFF time of the current switching period, the detected current value ILmes (i-1) acquired at the last sampling timing tmi-1 within the OFF time of the previous switching period to calculate the difference △Ii. In step S14, the control device 50 determines whether the calculated difference △Ii has exceeded a threshold. When determining that the calculated difference △Ii is smaller than or equal to the threshold, the control device 50 determines that the control mode in the next switching period is the discontinuous current mode. When determining that the calculated difference △Ii is greater than the threshold, the control device 50 determines that the control mode in the next switching period is the continuous current mode. As shown in the second timing chart in Fig. 15, at time t1, the control device 50 determines that the calculated difference △Ii has exceeded the threshold, determining that the control mode in the next switching period switches from the discontinuous current mode to the continuous current mode. The threshold in the present embodiment may be set to a value different from the threshold in the first embodiment.

In addition, in step S13, the control device 50 may subtract the detected current value ILmes acquired at the first sampling timing ti within the ON time of the current switching period from the detected current value ILmes acquired at the last sampling timing tmi within the OFF time of the current switching period to calculate the difference △Ii. The variation in the difference in this case is shown in the third chart in Fig. 15.

<Other Embodiments>

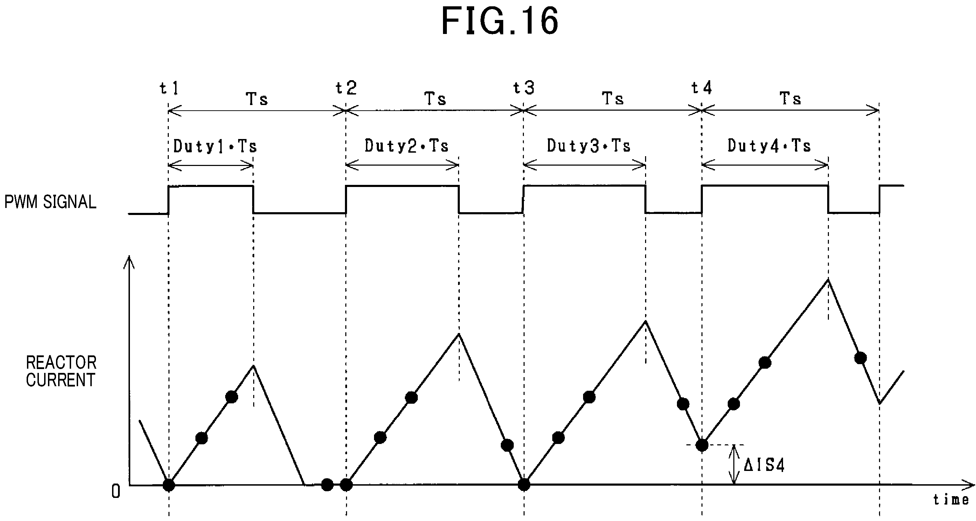

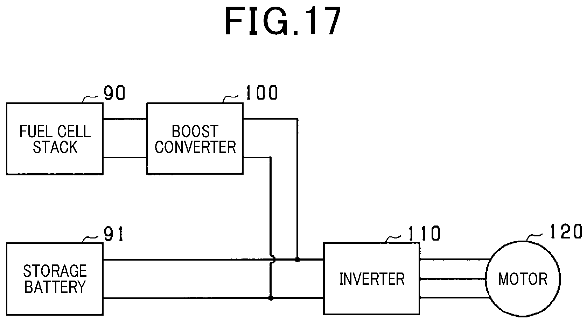

The above-described embodiments may be modified and implemented as described below.
· In step S13 in the first embodiment, the control device 50 may subtract, from the detected current value ILmes acquired at the first sampling timing within the current switching period, the detected current value ILmes acquired at the first sampling timing within the previous switching period to calculate the difference △ISi. Fig. 16 shows △IS4 as an example of this difference.
· In the configuration illustrated in Fig. 1, instead of the storage battery 21, an electric load may be connected to the output terminals THo and TLo. In this case, instead of the current-controlled DC-DC converter, the DC-DC converter may be a voltage-controlled DC-DC converter with current minor loop control in current control of the control device.
· The control system is not limited to the configuration illustrated in Fig. 1, but may have, for example, the configuration illustrated in Fig. 17. The configuration illustrated in Fig. 17 belongs to a motor drive system for an electric vehicle including a fuel cell 90. This system includes a boost converter 100, a storage battery 91, an inverter 110, and a motor 120. The boost converter 100 steps up the output voltage of the fuel cell 90 and supplies the output voltage to the inverter 110. The inverter 110 converts DC power supplied from at least one of the boost converter 100 and the storage battery 91 into AC power and supplies the AC power to the armature winding of the motor 120. In this configuration, the present disclosure may be applied to current control for the boost converter 100.
· The DC-DC converter to which the present disclosure is applicable is not limited to a boost converter, but may be a buck converter, which steps down input voltage and outputs the voltage, or a buck-boost converter, which has step-up and step-down functions.

The DC-DC converter to which the present disclosure is applicable is not limited to a non-isolated converter, but may be an isolated converter including a transformer. The transformer includes a primary-side reactor for input and a secondary-side reactor for output. The isolated DC-DC converter is, for example, a flyback converter, a forward converter, a push-pull converter, or a full-bridge converter and includes a switch on the primary side.

In one example, a forward converter includes, on the secondary side, a reactor (hereinafter, a specific reactor) different from the secondary-side reactor of the transformer. For a forward converter, during the ON time of the primary-side switch, the value of current flowing in the secondary-side specific reactor increases gradually, and magnetic energy is stored in the specific reactor. During the OFF time of the primary-side switch, the value of current flowing in the specific reactor decreases gradually to zero. As a result, within one switching period, the temporal waveform of the value of current flowing in the specific reactor becomes triangular and then remains at zero.

In another example, for a flyback converter, during the ON time of the primary-side switch, the value of current flowing in the primary-side reactor included in the transformer increases gradually, and magnetic energy is stored in the primary-side reactor and the transformer core. During the OFF time of the primary-side switch, the stored energy is released, and the value of current flowing in the primary-side reactor decreases gradually to zero. As a result, within one switching period, the temporal waveform of the value of current flowing in the primary-side reactor becomes triangular and then remains at zero.
. The controller and the control method described in the present disclosure may be implemented by a dedicated computer including memory and a processor programmed to execute one or more functions embodied by computer programs. Alternatively, the controller and the control method described in the present disclosure may be implemented by a dedicated computer including a processor having one or more dedicated hardware logic circuits. Alternatively, the controller and the control method described in the present disclosure may be implemented by one or more dedicated computers including a combination of memory and a processor programmed to execute one or more functions and a processor having one or more hardware logic circuits. The computer programs may be stored in a non-transitory, tangible computer readable storage medium as instructions executed by a computer.

Although the present disclosure has been described in accordance with the embodiments, it will be understood that the disclosure is not limited to the embodiments or the structures. The disclosure encompasses various modifications and alterations falling within the range of equivalence. Additionally, various combinations and forms as well as other combinations and forms with one, more than one, or less than one element added thereto also fall within the scope and spirit of the present disclosure.

## Claims

1. A DC-DC converter control device (50) that is applicable to a DC-DC converter (10, 100) including a switch (31) and a reactor (30) and, for each switching period of the switch including an ON time and an OFF time subsequent thereto, controls the switch to store magnetic energy into the reactor and release magnetic energy from the reactor, thereby transforming and outputting input voltage, the DC-DC converter control device comprising:

   an acquisition unit configured to, for each switching period, acquire a detected current value from a current detection unit (42) for detecting a current flowing in the reactor; and
   a determination unit configured to determine whether a current control mode is a discontinuous current mode or a continuous current mode,
   wherein
   the determination unit is configured to

   perform a calculation process to calculate a difference between the detected current values acquired at corresponding specific timings within different switching periods or a difference between the detected current values acquired at two specific timings within each switching period, and
   determine whether the control mode is the discontinuous current mode or the continuous current mode based on the calculated difference.

2. The DC-DC converter control device according to claim 1, wherein
   the determination unit is further configured to

   as the calculation process, perform a process to calculate a difference between the detected current value acquired at a first specific timing within the OFF time of each switching period and the detected current value acquired at a second specific timing within the OFF time of a switching period immediately preceding to the first specific timing,
   calculate the sum of the differences calculated for the switching periods, and
   when determining that the calculated sum has exceeded a threshold, determine that the control mode has switched from the discontinuous current mode to the continuous current mode.

3. The DC-DC converter control device according to claim 2, wherein

   the acquisition unit is further configured to acquire the detected current values at a plurality of timings within each switching period, and
   the first specific timing and the second specific timing are set to the last timing of the plurality of timings.

4. The DC-DC converter control device according to claim 3, wherein
   the first specific timing and the second specific timing are set in the OFF time when a duty ratio defining a proportion of the ON time in one switching period of the switch reaches a maximum possible value.

5. The DC-DC converter control device according to claim 1, wherein

the acquisition unit is further configured to acquire the detected current values at a plurality of timings within each switching period, and
the determination unit is further configured to

as the calculation process, perform a process to calculate a power of a difference between, for each switching period, the detected current value acquired at a first specific timing set within the ON time and the detected current value acquired at a second specific timing set within the OFF time,
calculate the sum of the powers calculated for the switching periods, and
when determining that the calculated sum has exceeded a threshold, determine that the control mode has switched from the discontinuous current mode to the continuous current mode.

6. The DC-DC converter control device according to claim 5, wherein
when the actual control mode is the discontinuous current mode, the absolute value of the difference between the detected current value acquired at the first specific timing and the detected current value acquired at the second specific timing is a value smaller than one, whereas when the actual control mode shifts from the discontinuous current mode to the continuous current mode, the absolute value of the difference between the detected current value acquired at the first specific timing and the detected current value acquired at the second specific timing becomes a value greater than one.

7. The DC-DC converter control device according to claim 5 or 6, wherein

the first specific timing is set to the first timing of the plurality of timings, and
the second specific timing is set to the last timing of the plurality of timings.

8. A program that is applicable to a DC-DC converter (10, 100) including a switch (31), a reactor (30) and a computer (51) and, for each switching period of the switch including an ON time and an OFF time subsequent thereto, controls the switch to store magnetic energy into the reactor and release magnetic energy from the reactor, thereby transforming and outputting input voltage, the program causing the computer to perform:

a process to acquire, for each switching period, a detected current value from a current detection unit (42) for detecting a current flowing in the reactor; and
a determination process to determine whether a current control mode is a discontinuous current mode or a continuous current mode,
wherein
the determination process includes

calculating a difference between the detected current values acquired at corresponding specific timings within different switching periods or a difference between the detected current values acquired at two specific timings within each switching period, and
determining whether the control mode is the discontinuous current mode or the continuous current mode based on the calculated difference.

# FIG.1

# FIG.2

DISCONTINUOUS MODE

t1(SWITCH ON)

$T_S$

$Duty \cdot T_S$

PWM SIGNAL

REACTOR CURRENT

0

time

# FIG.3

CRITICAL MODE

t1(SWITCH ON)

$T_S$

$Duty \cdot T_S$

PWM SIGNAL

REACTOR CURRENT

0

time

# FIG.4

CONTINUOUS MODE

t1(SWITCH ON)

$T_S$

$Duty \cdot T_S$

PWM SIGNAL

REACTOR CURRENT

0

time

# FIG.5

<COMPARATIVE EXAMPLE: DELAYED SWITCH BETWEEN DffA AND DffB>

# FIG.6

### ⟨COMPARATIVE EXAMPLE: EARLIER SWITCH BETWEEN DffA AND DffB⟩

ACTUAL TIMING OF
MODE SWITCHING

FF TERM     USE DffA ⟶⟶ USE DffB

DffA

DffB

0       time

IDEAL TIMING OF
MODE SWITCHING

AVERAGE REACTOR
CURRENT VALUE

COMMAND
VALUE

DETECTED VALUE

0       time

# FIG.7

REACTOR CURRENT

RINGING DUE TO LC RESONANCE

# FIG.8

REACTOR CURRENT

# FIG.9

EP 4 637 014 A1

# FIG.10

```
                    START
                      |
                      |        ┌─S10
                      ▼
              ACQUIRE Iref
                      |
                      |        ┌─S11
                      ▼
           CALCULATE Duty IN
           DISCONTINUOUS MODE
                      |
                      |        ┌─S12
                      ▼
           CALCULATE Duty IN
           CONTINUOUS MODE
                      |
                      |        ┌─S13
                      ▼
              DETERMINE MODE
                      |
                      |        ┌─S14
                      ▼                          NO
         DISCONTINUOUS MODE ? ─────────────────────┐
                      |                             |
                     YES                            |
                      |    ┌─S15                     |    ┌─S17
                      ▼                             ▼
           CONTROL WITH Duty IN          CONTROL WITH Duty IN
           DISCONTINUOUS MODE             CONTINUOUS MODE
                      |                             |
                      ◄─────────────────────────────┘
                      |        ┌─S16
         NO           ▼
     ┌───────── STOP DRIVE ?
     |                |
     |               YES
     |                ▼
     |              END
```

# FIG.11

DISCONTINUOUS MODE $\Longleftarrow$ ┊ $\Longrightarrow$ CONTINUOUS MODE

AVERAGE
REACTOR
CURRENT
VALUE

COMMAND VALUE

DETECTED VALUE

time

$\Sigma \Delta I_i$

0

CURRENT
DETECTION
ERROR

time

LAST DETECTED VALUE
WITHIN EACH PERIOD

$t_1$

# FIG.12

START

ACQUIRE Iref — S10

DETERMINE MODE — S13

DISCONTINUOUS MODE ? — S14
NO
YES

CALCULATE Duty IN DISCONTINUOUS MODE — S11

CALCULATE Duty IN CONTINUOUS MODE — S12

CONTROL WITH Duty IN DISCONTINUOUS MODE — S15

CONTROL WITH Duty IN CONTINUOUS MODE — S17

STOP DRIVE ? — S16
NO
YES

END

# FIG.13

EP 4 637 014 A1

# FIG.14

DISCONTINUOUS MODE ⟸ ⟹ CONTINUOUS MODE

AVERAGE REACTOR CURRENT VALUE

COMMAND VALUE

DETECTED VALUE

0 — time

$\Sigma \, \Delta IL_i^{\alpha}$

0 — time

$\Delta IL_i^{\alpha}$

0 — time

$t\,1$

# FIG.15

DISCONTINUOUS MODE ⟸ ⟹ CONTINUOUS MODE

AVERAGE
REACTOR
CURRENT
VALUE

COMMAND VALUE

DETECTED VALUE

0 → time

$\Delta I_i$

0 → time

DIFFERENCE
BETWEEN FIRST
DETECTED VALUE
AND LAST
DETECTED VALUE

0 → time

t1

# FIG.16

EP 4 637 014 A1

# FIG.17

## INTERNATIONAL SEARCH REPORT

| International application No. |
|---|
| **PCT/JP2023/042761** |

| A. | CLASSIFICATION OF SUBJECT MATTER |
|---|---|

*H02M 3/155*(2006.01)i
FI:   H02M3/155 H

According to International Patent Classification (IPC) or to both national classification and IPC

| B. | FIELDS SEARCHED |
|---|---|

Minimum documentation searched (classification system followed by classification symbols)

H02M3/155

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-127283 A (FUJI ELECTRIC CO., LTD.) 20 August 2020 (2020-08-20) paragraphs [0010]-[0074], fig. 1-6 | 1, 8 |
| A | | 2-7 |
| A | US 2019/0273441 A1 (HYUNDAI MOTOR CO.) 05 September 2019 (2019-09-05) entire text, all drawings | 1-8 |
| A | JP 2020-088971 A (TOYOTA JIDOSHA KABUSHIKI KAISHA) 04 June 2020 (2020-06-04) entire text, all drawings | 1-8 |
| A | JP 2015-162989 A (TOYOTA JIDOSHA KABUSHIKI KAISHA) 07 September 2015 (2015-09-07) entire text, all drawings | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 January 2024** | **20 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2023/042761**

| Patent document cited in search report | | | Publication date (day/month/year) | Patent family member(s) | | | Publication date (day/month/year) |
|---|---|---|---|---|---|---|---|
| JP | 2020-127283 | A | 20 August 2020 | US | 2020/0251988 | A1 | |
| | | | | paragraphs [0018]-[0083], fig. 1-6 | | | |
| US | 2019/0273441 | A1 | 05 September 2019 | DE | 102018127717 | A1 | |
| | | | | KR | 10-2019-0104815 | A | |
| | | | | CN | 110224604 | A | |
| JP | 2020-088971 | A | 04 June 2020 | US | 2020/0161974 | A1 | |
| | | | | entire text, all drawings | | | |
| | | | | DE | 102019127472 | A1 | |
| | | | | CN | 111200144 | A | |
| JP | 2015-162989 | A | 07 September 2015 | US | 2015/0244261 | A1 | |
| | | | | entire text, all drawings | | | |
| | | | | DE | 102015102417 | A1 | |
| | | | | CN | 104883055 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022198100 A
- JP 2016149902 A